# EUROPEAN PATENT APPLICATION

(11) **EP 2 362 625 A1**
(43) Date of publication of application: **31.08.2011**
(21) Application number: 10462001.8
(22) Date of filing: 19.02.2010
(51) Int. Cl.: H04M 3/487, G06Q 30/00

(54) **Method and integrated website for providing in-call and after-call advertisements**

(71) Applicant: Nemes, Tibor, 2089 Telki (HU); Keszler, Matyas, 1025 Budapest (HU); Zang, Zoltan, 1021 Budapest (HU)
(72) Inventor: Nemes, Tibor, 2089 Telki (HU); Keszler, Matyas, 1025 Budapest (HU); Zang, Zoltan, 1021 Budapest (HU)
(74) Representative: Kacsuk, Zsófia

(57) **Abstract**

The invention relates to a method for providing in-call and after-call services to a customer having a mobile phone, the method comprising:
- providing a voice-file for playing on a customer's mobile phone while a call is being initiated by the customer as part of an in-call service,
- sending the customer a follow-up message to a communication address of the customer as part of an after-call service.

The invention further relates to an integrated website for providing in-call and after-call services to a customer having a mobile phone, comprising
- a voice server for transmitting a voice-file to the customer's mobile phone while the customer is waiting to be connected to a called number as part of an in-call service and
- a follow-up message server for sending the customer a follow-up message to a communication address of the customer as part of an after-call service.

## Description

The present invention relates to a method and integrated website for providing in-call and after-call services to a customer.

The increasing importance of mobile phone communication has led to the development of multi-functional mobile phones (also called handphones or cellphones) having high-resolution screens, built-in cameras, USB internet modems, etc. In all the developed countries mobile phones have by now become standard accessories for most people irrespective of their age, sex or social or educational background. Modern mobile phones are not only telecommunication devices but are also small portable multi-media devices constantly being carried about by their users, which makes them ideal for marketing purposes.

Current mobile technology allows for various mobile advertising methods, however mobile service providers as well as independent companies (particularly advertising companies) generally only make use of the mobile telephone network for sending personalised advertisements via text messages (SMS) or MMS messages (Multimedia Messaging Service) to the users of the mobile phones. For the most part such advertisements are hyperlinked to the mobile telephone service subscription and are not sent in the course of telecommunication but rather as an independent service advertisement.

The mobile service providers typically do not make use of the idle time between initiating a call by a caller and connecting the caller to a receiver, i.e. the ring time, while the phone is ringing. The typical commercial use of such a ring time is providing a receiver selected voice-file to the caller, while he is waiting for the receiver to pick up. Also, the caller has no choice of excluding such voice-files in case of disapproval of the voice-file or its content nor is there any possibility of accessing the voice-file or any other related material afterwards should the caller take an interest in the voice-file or its content. Furthermore, only very few mobile phone customers whish to provide voice-files to other people calling them, while countless number of calls are being made every day, hence only an insignificant fraction of the total ring time is used for commercial purposes. Moreover, a lot of companies exist that have scarcely any incoming calls and are therefore incapable of making use of the described service but who could be interested in providing voice-files for marketing/advertising purposes.

Thus the present system is neither optimal for the mobile service provider nor is it optimal for the potential advertisers since voice-files (e.g. advertisement) can only be played to the callers calling specific numbers (i.e. the numbers of the subscribers of the above described ring tone service).

A further drawback is that the caller is not provided with the possibility of re-listening to any such voice-file without having to repeat his call (and even then there is no guarantee that the receiver will not pick up early and thus interrupt the voice-file) nor is he able to access its content or any related information.

In-call advertising partly solves the above problems by providing advertisements for the caller to listen to while he is waiting to be connected to the person he is calling. However, the drawback of not being able to retain or access the information content of the advertisement remains.

It is an object of the present invention to overcome the above problems associated with the prior art.

The inventors have realised that the ring time can be used to provide caller selected or caller approved voice-files to the caller independently of the number he is ringing; and these voice-files can be played on the caller's mobile phone while his phone is ringing upon initiation of a call by the caller. The inventors have also realised that voice-file information (i.e. the voice-file itself and/or its content and/or any related information) may be made accessible to the caller on the Internet and the access information of any such Internet site may be sent to the caller in a follow-up message to a communication address provided by the caller.

Accordingly, the invention provides a method for providing in-call and after-call services to a customer having a mobile phone, the method comprising:
- providing a voice-file for playing on a customer's mobile phone while a call is being initiated by the customer as part of an in-call service,
- sending the customer a follow-up messages to a communication address of the customer as part of an after-call service.

The in-call and after-call services comprise mobile services, i.e. services available via a mobile phone (such as the voice-file played on the mobile phone as part of the in-call service and such as an MMS message sent to the mobile phone as part of the after-call service) additionally the in-call and after-call services may comprise other communication services, i.e. services provided via other communication means (such as a follow-up message sent in the form of an e-mail or an Internet web-site allowing access to other related information).

The services advantageously fall in the domain of advertising and marketing, however other types of services may be offered in the form of in-call and after-call services, such as the dissemination of public information, public notices, charity notices, etc.

The service provider of the in-call and after-call services is preferably a media agency such as an advertising agency, or a business company allowing advertisers and/or advertising companies to offer media services (typically multi-media advertisements) via an integrated website of the business company.

In a preferred embodiment the method comprises providing an Internet site, preferably a micro-site, comprising voice-file information such as the voice-file itself and/or information on the content of the voice-file and/or information related to the content of the voice-file, and the method comprises including the hyperlink of the Internet site in the follow-up message.

In the context of the present invention the term micro-site indicates a special Internet site within the frame of the integrated website of the media agency, which micro-site may be used by the clients (e.g. advertisers/advertising companies) of the media agency for the purpose of dissemination of multi-media content. For example the voice-file may be an advertisement and the advertiser may up-load text, images, videos or other voice-files related to the advertisement onto the micro-site, the hyperlink of which is sent to the customer as part of an after-call service provided by the media agency.

The follow-up message may be an SMS text message or an MMS message transmitted to the mobile phone of the customer, e.g. via an SMS/MMS server. Such an SMS/MMS server may be part of the integrated website of the media agency, or the messages may be sent via the SMS/MMS server of a mobile service provider of the customer. Alternatively such an SMS/MMS server may be run by a third party. The follow-up message may also be an e-mail, which is sent e.g. by an e-mail server to an e-mail address provided by the customer when subscribing to or consenting to the in-call and after-call services. In a preferred embodiment the mobile service provider provides the customer with an e-mail address belonging to the customer's mobile phone number as well as an integrated mailbox for receiving e-mails and preferably voice mails and SMS messages as well.

Preferably the method according to the invention includes monitoring whether or not the Internet site (micro-site) is visited as a result of activating the hyperlink in the follow-up message. Preferably, the hyperlink is a unique hyperlink, thus when customer accesses the Internet site (micro-site) by activating the hyperlink contained in the E-mail or MMS message the visit can be associated with the specific customer to whom the unique hyperlink has been sent.

The method preferably includes providing a customer database for storing the customer profile of the customers to the in-call and after-call services. Such a customer database may be provided at the integrated website of the media agency and/or at the mobile service provider.

Preferably, the customer database comprises a dynamic field and the method includes monitoring and registering the rendered in-call and after-call services therein. Preferably, the dynamic field is checked before providing new in-call and after-call services in order to determine whether such service may be provided in accordance with any limitations set in the customer profile (e.g. a limit on the number of in-call and after-call services that may be provided per day or a limit set for the number of certain types of in-call and after-call services, such as limiting the number of advertisements falling within a certain category).

In a second aspect the invention provides an integrated website for providing in-call and after-call services to a customer having a mobile phone, the integrated website comprising:
- a voice server for transmitting a voice-file to the customer's mobile phone while the customer is waiting to be connected to a called number as part of an in-call service and
- a follow-up message server for sending the customer a follow-up message to a communication address of the customer as part of an after-call service.

The follow-up message server need not correspond to the actual SMS/MMS server responsible for sending an SMS/MMS message, it may be a software unit of the integrated website responsible for sending a request to an SMS/MMS server (e.g. of the customer's mobile service provider or of a third party) which carries out the actual sending of the SMS/MMS message.

In a preferred embodiment an Internet site, more preferably a micro-site is provided within the integrated website, the micro-site containing voice-file information such as the voice-file itself, information on the content of the voice-file, information related to the content of the voice-file, and preferably the follow-up message server is provided with the hyperlink of the Internet site for inclusion in the follow-up message.

Further advantageous embodiments of the invention are defined in the attached dependent claims.

Further details of the invention will be apparent from the accompanying figures and exemplary embodiments.

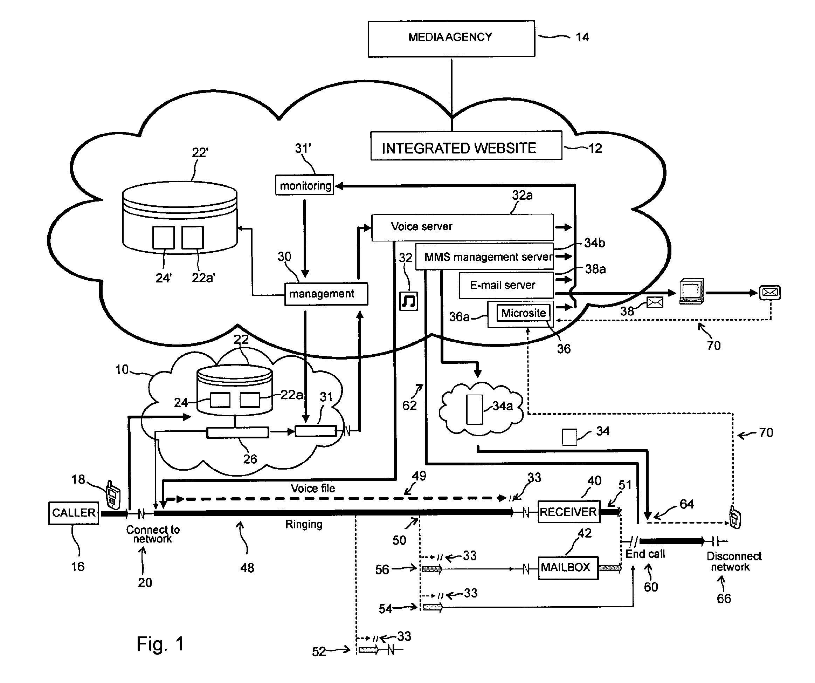

Fig. 1 is a schematic block diagram illustrating the method and system according to the invention.

In the present exemplary embodiment the mobile service provider 10 is connected to an integrated in-call and after-call website 12, which can either belong to the mobile service provider 10 or to another company, such as a media agency 14. The media agency 14 can be any business company allowing advertisers and/or advertising companies and/or government agency and/or other firms to offer media services (typically multi-media advertisements) via the integrated website 12. The media agency 14 may itself be an advertising company the clients of whom are advertisers wishing to disseminate advertisements in the form of in-call and after-call services. The media agency 14 provides - via the integrated website 12 - in-call advertisement with the help of the mobile service provider 10 while a customer 16 of the mobile service provider 10 is making a call during the idle period while waiting to be connected (i.e. while the mobile phone 18 of the customer 16 is ringing). The media agency 14 also provides after-call advertisement in connection with the in-call advertisement via the integrated website 12.

When the caller 16 initiates a call from his mobile phone 18 the phone 18 starts to communicate with a nearby base station (cell) of the mobile service provider 10, which connects it to the main mobile phone network 20 of the mobile service provider 10.

The mobile service provider 10 preferably has a customer database 22 where customer profiles 24 are recorded, which include information as to whether in-call and after-call advertisements have been authorised by the customer and the conditions thereof. For example and depending on the advertisement service offered by the mobile service provider 10 the customer may limit the number of advertisements reaching him pro day, or he may set the rate (how many advertisements may be provided in proportion to the number of calls actually made by the customer, e.g. only every third call may be used for advertising), or he may indicate his advertisement preferences (e.g. cars, cooking, education, etc.). He may also indicate the rate or total number of advertisement types, e.g. he may be willing to listen to car advertisements 10 times a day, while limiting the number of cooking advertisement to a maximum of two per day. It is also possible that the advertisement preference profile is drawn up by the mobile service provider 10 - if the customer 16 consents thereto - by monitoring the called numbers, e.g. somebody frequently calling foreign numbers might be targeted with cheep flight offers.

If the number of advertisements pro day or the rate of the advertisements or their type is to be monitored the customer database 22 may include a dynamic field 22a where the number (and optionally the type) of the advertisements already provided that day or the advertisement-free calls in a row are constantly being up-dated in a way to be explained later on. Optionally a media-agency database 22' may be provided within the frame of the integrated website 12 for storing the customer profile 24' and having a dynamic field 22a' for keeping track of the advertisement statistics, e.g. the delivered advertisements, the number of advertisements as well as the advertisement-free calls. The customer profiles 24' stored at the media agency's 14 customer database 22' may include information such as the customer's advertisement preferences, optionally this kind of information may be provided by the mobile service provider 10 whenever he roots a call to the media agency's 14 integrated website 12.

When the caller's 16 phone call reaches the mobile service provider 10 a consent manager 26, which is preferably a software unit running e.g. on a server of the mobile service provider 10, looks up the profile of the customer 16 in the customer database 22 based on the phone number of the mobile phone 18 initiating the call and determines whether the customer 16 registered with that phone number has subscribed to or consented to the advertisement services. If the consent manager finds that the customer 16 has not authorised in-call advertisement the phone call is simply routed in a known way to the telephone device the number of which has been dialled.

If on the other hand the consent manager 26 determines that the customer 16 has authorised in-call advertisement and that it is currently possible to provide advertisement to the caller (e.g. because the number of advertisements set for a day have not yet been exhausted or because the required number of advertisement-free calls have been made since the last advertisement) or if the number and rate of the advertisements are registered by the external media agency 14, then the consent manager 26 initiates connection to the exterior website 12 preferably via an advertisement manager unit 30 of the media agency 14 provided for such purposes. The advertisement manager unit 30 is preferably a software unit generally responsible for the management of the in-call and after-call services (which may comprise non-advertisement like services, such as public services).

If the customer database 22 of the mobile service provider 10 contains information on the advertisement preferences of the customer 16 (provided either by the customer or drawn up based on his phone calls), such information is preferably indicated to the media agency's 14 manager unit 30. In case there is a customer database 22' belonging to the advertisement company 14, the manager unit 30 also checks this customer database 22' for information as to advertisement preferences and/or the advertisement statistics which may include the number of advertisements already played during the current day and the daily limit, the number of advertisement-free calls made since the last advertisement and the consented advertisement rate, the in-call advertisements already played to the customer 16 within the last hour/day/etc., the after-call advertisements already sent to the customer 16 in connection with a given in-call advertisement, the Internet sites (micro-sites) visited by the user as a result of the after-call advertisement.

From this information the advertisement manager unit 30 determines whether or not an advertisement may be sent to the customer's 16 mobile phone 18 and which advertisement should or should not be sent.

Once the appropriate advertisement is selected the advertisement manager unit 30 activates a voice-file 32 containing the advertisement from the website 12 (e.g. from a voice server 32a of the integrated website 12, which may be a hardware or software server unit) and sends the voice-file 32 back to the caller's 16 mobile phone 18.

In the mean time the mobile service provider 10 routes the call of the caller 16 to the receiver 40 and the ringing starts.

While the mobile phone 18 is ringing (illustrated by reference numeral 48) and the caller 16 is waiting to be connected the activated voice-file 32 is played to the caller 16 via his mobile phone 18 (illustrated by reference numeral 49). The voice-file 32 is preferably 5 to 30 seconds long, more preferably 5 to 15 seconds long. When providing short voice-files 32 of about 5 sec, it is very likely that the receiver 40 will not pick up before the playing of the voice-file 32 ends (illustrated by reference numeral 33) thus the caller 16 was able to listen to the whole of the voice-file 32 before being connected to the receiver 40 (illustrated by reference numeral 50) after which the caller 16 and the receiver 40 are able to talk (illustrated by reference numeral 51). If however the receiver 40 picks up early (as illustrated by the reference numeral 52) the playing of the voice-file 32 is terminated (illustrated by reference numeral 33). The voice-file 32 is also terminated (illustrated by reference numeral 33) if the call is interrupted by the caller 16 himself - he hangs up - (illustrated by reference numeral 54) or if the mailbox 42 of the receiver 40 is activated before the voice-file 32 is over (illustrated by reference numeral 56).

Depending on the advertising service conditions an interrupted advertisement may or may not count as a delivered advertisement when the number or the rate of the advertisements is limited. In such cases the after-call advertisement may or may not be activated depending on the conditions agreed upon by the mobile service provider 10 and the media agency 14 and/or by the mobile service provider 10 and the customer 16.

If the whole of the advertisement voice-file has been played and a follow-up message has been transmitted to the customer 16 then a monitoring software 31' of the integrated website 12 preferably registers the fact of advertising. Preferably the advertisement manager unit 30 records in the customer database 22' of the integrated website 12 that an advertisement has been provided to the customer 16, and preferably records which advertisement voice-file 32 has been played and which follow-up message has been sent in order not to repeat the same advertisement for a certain period and in order to take into consideration any number or repetition rate limit of advertisements within the same category (e.g. cars). Optionally the advertisement manager unit 30 may inform the mobile service provider 10 of the successful advertisement delivery in which case the latter may be responsible for keeping track of the number (and optionally type) of advertisements provided to the given customer 16 and their frequency rate. The mobile service provider 10 may also monitor the number of delivered advertisements of its own motion via its own monitoring software 31, independently of the monitoring software 31' of the integrated website 12 or based on information provided by the monitoring software 31' of the integrated website 12 (as schematically illustrated in Fig. 1). This is particularly advantageous if the mobile service provider 10 gives a reduction in the call tariffs for each call where an advertisement has been successfully delivered to the caller 16. Naturally other kinds of tariff reductions are also conceivable to render the advertising service more tempting to customers 16, for example the customer 16 can benefit from higher tariff reductions if he agrees to listen to advertisements more often, meaning that less calls need to be kept advertisement-free. It is also conceivable that the customer 16 can dial a special pre-dial number thereby authorising the mobile service provider 10 on a case-by-case basis to provide advertisements entitling the caller 16 to a tariff reduction for the given call. For example the consent manager 26 may monitor the initiated call with regard to any such pre-dial number and interpret the pre-dial number as an authorisation to root the call to the integrated website 12 of the media agency 14, where a voice-file 32 and corresponding follow-up message may be selected according to various considerations such as the highest bidder for such irregular advertising spots. Irregular in the sense that the customer 16 need not have a fix contract prior to authorising advertisements via the pre-dial number. Alternatively, the customer 16 may register for an advertisement-on-request type of service, where advertisements are provided only upon initiating a call with the given pre-dial number but the advertisement is provided in accordance with a customer profile 24 drawn up in advance and with the consent of the customer 16.

The after-call advertisements are preferably activated after the call is ended between the caller 16 and the receiver 40 or when the call is ended without the caller 16 having spoken with the receiver 40 if the voice-file 32 has been interrupted for any reason as in cases 52, 54, 56. Optionally the after-call advertisement may be activated upon termination of the voice-file 32 (either because it is over or because it has been interrupted) i.e. before the call is actually terminated by either the caller 16 or the receiver 40 as illustrated in Fig. 1. In this case the call ends in step 60 upon which the after-call service is activated in step 62 while the mobile phone 18 is still connected to the network 20 of the mobile service provider 10. In step 64 the caller 16 receives an MMS or SMS message 34 and the mobile phone 18 is disconnected from the network 20 in step 66. Another option is to activate the follow-up message automatically upon starting transmission of the voice-file 32 to the caller's 16 mobile phone 18, i.e. the voice-file 32 and the follow-up message may be provided simultaneously, this is particularly the case when the follow-up message is in the form of an e-mail 38. However, if the follow-up message is in the form of an MMS or SMS message 34 it is most preferred to activate the after-call advertisement once the call is ended between the caller 16 and the receiver 40 (case 50) or once the caller 16 has left a voice mail or hung up after connection to the mailbox 40 of the called person 40 (case 56), thus the call of the caller 16 will not be disturbed by any sound signal generated by his mobile phone 18 upon receipt of the MMS or SMS message 34. In the latter case the mobile phone 18 of the caller 16 is still connected to the telecommunication network when the after-call advertisement in the form of an MMS or SMS follow-up message can be sent to the caller's 16 mobile phone 18. The follow-up message is preferably also provided by the integrated advertisement website 14 (e.g. via the advertisement manager unit 30). When the follow-up message is in the form of a SMS text message or an MMS message 34 it is generated e.g. by an SMS and/or MMS server of the integrated website 12. More preferably the SMS/MMS server 34a is part of the mobile service provider's 10 infrastructure and the integrated website 12 merely provides the content of the messages 34 and initiates their sending to the customer 16 via an SMS/MMS management server 34b (hardware or software server unit). Alternatively the SMS/MMS server may be run by a third party. The message 34 preferably contains information (in text and/or picture form) related to the voice-file advertisement, such as the text of the advertisement and preferably a hyperlink to an Internet site hosted on a webserver 36 of the integrated advertising website 30, more preferably it contains a hyperlink to a micro-site 36 hosted on a webserver 36a (hardware or software server unit) of the integrated website 12 and dedicated to the advertiser, i.e. the contents of the micro-site 36 are preferably uploaded directly by the advertiser. The Internet site (micro-site 36) preferably contains the advertisements and/or related text and/or multi-media. The micro-site 36 is preferably optimised for browsing with a mobile telephone and through normal internet access. It may for example comprise the voice-file 32, which can be replayed by the caller 16 visiting the site 32, it may comprise more details about the advertised offer, it may advertise similar offers of the same advertiser or it may contain any other information deemed expedient by the advertiser.

Optionally, the follow-up message may be in the form of an e-mail 38, which is sent e.g. by an e-mail server 38a (hardware or software server unit) of the integrated website 12 to an e-mail address previously provided by the customer 16. In this case the e-mail contains information (e.g. text, pictures, video-file, banner advertising etc. and/or any communication options, tools and means that are available on the Internet) related to the voice-file advertisement and/or a hyperlink to the micro-site 36 of the integrated advertising website 12.

The integrated website 12 may preferably use the e-mail address of the customer 16 provided by the mobile service provider 10 as part of an integrated mailbox. Such e-mail addresses are generally formed of the telephone number of the customer 16 and the web address of the mobile service provider 10, hence the e-mail address need not be stored as it may be deduced from the telephone number of the customer 16 initiating a call from his mobile phone 18.

Optionally, the same or different follow-up messages may be sent both to the mobile phone 18 of the customer 16 and to the e-mail address provided by the customer 16.

Preferably the integrated website 12 generates a unique hyperlink for each follow-up message (SMS, MMS or e-mail) in order to be able to monitor at the webserver 36a whether or not the hyperlink contained in the message has been visited by the customer 16 as indicated by reference numeral 70. If the media agency 14 pays for each such visit to the mobile service provider 10 then the mobile service provider 10 is preferably allowed to monitor or audit the visit of the micro-sites 36. Optionally the follow-up SMS or MMS message may be sent to the customer 16 via the mobile service provider 10 who may replace the media agency's 14 hyperlink with its own personalised hyperlink whereby when the customer activates the hyperlink in the follow-up message the mobile service provider 10 redirects the customer 16 to the micro-site 36 from his own webserver 36a. This way both the media agency 14 and the mobile service provider are able to monitor the number of visits to the micro-sites 36 in an authentic manner.

Monitoring the visits made on the micro-sites 36 may be important from the point of view of the customers 16 as well. For example customers 16 can be encouraged to activate the hyperlinks contained in the follow-up message by offering them further call tariff reduction in case of visiting the micro-sites 36.

It is also possible that the mobile service provider 10 owns (wholly or partly) the integrated website 12 in which case communication and monitoring can be simplified. For example, in this case only one customer database 22 is required for storing the customer profiles 24 and a dynamic field 22a for keeping track of the delivered advertisements, their number and their rate. Also no extra cross-checking mechanism is required by the mobile service provider if the integrated website 12 has no separate owner who would need to pay for each visit of the micro-site 36.

The above-described embodiments are intended only as illustrating examples and are not to be considered as limiting the invention. Various modifications will be apparent to a person skilled in the art without departing from the scope of protection determined by the attached claims.

## Claims

1. Method for providing in-call and after-call services to a customer having a mobile phone, the method comprising:
- providing a voice-file for playing on a customer's mobile phone while a call is being initiated by the customer as part of an in-call service,
- sending the customer a follow-up message to a communication address of the customer as part of an after-call service.

2. The method according to claim 1, comprising providing an Internet site, preferably a micro-site, comprising voice-file information such as the voice-file itself and/or information on the content of the voice-file and/or information related to the content of the voice-file, and the method comprising including the hyperlink of the Internet site in the follow-up message.

3. The method according to claims 1 or 2, including sending the follow-up message to the mobile phone of the customer preferably in the form of a text message or MMS message.

4. The method according to claims 1 or 2, including sending the follow-up message to an e-mail address of a customer.

5. The method according to any of claims 2 to 4, including monitoring whether or not the Internet site is visited as a result of activating the hyperlink in the follow-up message.

6. The method according to any of claims 2 to 5, including providing a customer database for storing the customer profile of the customers to the in-call and after-call services.

7. The method according to claim 6, wherein the customer database includes a dynamic field and registering rendered in-call and after-call services therein.

8. Integrated website for providing in-call and after-call services to a customer having a mobile phone, comprising
- a voice server for transmitting a voice-file to the customer's mobile phone while the customer is waiting to be connected to a called number as part of an in-call service and
- a follow-up message server for sending the customer a follow-up message to a communication address of the customer as part of an after-call service.

9. The integrated website according to claim 8 comprising an Internet site, preferably a micro-site containing voice-file information such as the voice-file itself, information on the content of the voice-file, information related to the content of the voice-file, and the follow-up message server being provided with the hyperlink of the Internet site for inclusion in the follow-up message.

10. The integrated website according to claim 9, wherein the integrated website further comprises monitoring means for monitoring whether or not the Internet site is visited as a result of activating the hyperlink in the follow-up message.

11. The integrated website according to any of claims 8 to 10, wherein the follow-up message server is an E-mail server and the follow-up message is in the form of an E-mail.

12. The integrated website according to any of claims 8 to 10, wherein the follow-up message is in the form of an SMS or MMS message and the follow-up message server is an SMS/MMS management server configured to initiate the sending of an SMS or MMS message by an exterior SMS/MMS server.

13. The integrated website according to any of claims 8 to 10, comprising a customer database for storing the customer profile of the customers to the in-call and after-call services.

14. The integrated website according to claim 13, wherein the customer database comprises a dynamic field and the integrated website further comprises monitoring means for monitoring rendered in-call and after-call services and the integrated website further comprises a management unit configured to register data provided by the monitoring means in connection with the rendered in-call and after-call services in the dynamic field of the customer database.
